# EUROPEAN PATENT SPECIFICATION

(11) **EP 2 339 780 B1**
(45) Date of publication and mention of the grant of the patent: **18.12.2019**
(21) Application number: 09180748.7
(22) Date of filing: 24.12.2009
(51) Int. Cl.: H04L 29/06, H04M 15/00, H04L 12/14, H04M 7/12

(54) **ROUTING SIGNALING MESSAGES THROUGH NETWORKS**
ROUTEN VON SIGNALISIERUNGSNACHRICHTEN ÜBER NETZWERKE
ROUTAGE DE SIGNALISATION DE MESSAGES SUR DES RÉSEAUX

(43) Date of publication of application: 29.06.2011
(73) Proprietor: Koninklijke KPN N.V., 3072 AP Rotterdam (NL)
(72) Inventor: Veenstra, Pieter, 2518 HR The Hague (NL); Span, Pieter, 1079 JS Amsterdam (NL); Pons, Colin, 3059 VC Rotterdam (NL)
(74) Representative: Wuyts, Koenraad Maria

(56) References cited:
- EP-A2- 2 061 221
- WO-A1-2007/126218
- 3GPP: "3rd Generation Partnership Project;Technical Specification Group Services and System Aspects;Voice Call Continuity between CS and IMS Study(Release 7)" 3GPP DRAFT; 23806-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. St. Julian, Malta; 20051123, 23 November 2005 (2005-11-23), XP050206146
- GURBANI BELL LABORATORIES V ET AL: "Representing Trunk Groups in tel/sip Uniform Resource Identifiers (URIs); rfc4904.txt" IETF STANDARD, INTERNET ENGINEERING TASK FORCE, IETF, CH, 1 June 2007 (2007-06-01), XP015052442 ISSN: 0000-0003

## Description

### Field of the invention

The invention relates to routing signaling messages through networks, and, in particular, though not necessarily, to a method and a system for routing a signaling message from a first network to a second network, a routing engine for use in such system and a computer product program using such method.

### Background of the invention

Currently many network operators are migrating from Public Switched Telephone Networks (PSTN) to so-called Next Generation Networks (NGN), typically IP-based communications systems, such as the IP Multimedia Subsystem (IMS) as developed by the Third Generation Partnership Project (3GPP). IMS is designed to provide IP Multimedia over mobile communication networks (3GPP TS 22.228, TS 23.218, TS 23.228, TS 24.228, TS 24.229, TS 29.228, TS 29.229, TS 29.328 and TS 29.329) .

For fixed broadband services, such as Voice over IP (VoIP), the ETSI TISPAN working group is further developing IMS (TS 24.229: IP Multimedia Call Control Protocol based on SIP and SDP). Within the IMS architecture, the basic user subscription functions and the IP session management are decoupled from the specific VoIP service functions, e.g. number analysis, CLIP/R, Call Waiting, Call Barring, Call Waiting, etc. These services are handled within one or more trusted application servers residing in the network.

As a consequence of such migration an operator network may be hybrid network comprising both packet switched and circuit switched communication systems. Due to the different nature of these networks however, service routing methods used in these networks are different and not compatible.

WO2007/126218 A1, discloses a Voice Call Continuity service. Firstly it is determined whether a Called Party Number (CPN) of a circuit switched domain call is in the international format. If this is not the case, the CPN is converted to a routable number by adding an international prefix, based on both the CPN and location information of the originating terminal. The call may then continue in either the circuit switched or IMS domain.

3GPP TR 23.806 V2.0.0 (2005-11), discloses on page 133-134 a call continuity mechanism, in which a TDM-RTP hybrid connection between a PSTN-phone A and a dual mode Mobile Station (MS) B is migrated to a full TDM connection, in response to the detection by said dual mode MS of a degradation of WLAN coverage.

EP 2061221 A2, discloses devices, methods, communication managers and user interface solutions that enable access to multiple services from a mobile communications device. One aspect of D3 is to provide a solution including a means to correctly display the caller name for incoming VoIP calls (such as Skype calls) that have been routed via a circuit switched to packet switched network gateway.

A PSTN based on time division multiplexing (TDM) uses routing methods based on the analyses of the called party number and a number of parameters that determine the context how the called party number analyses should be performed. For example, the Nature of Address (NoA) indicator and the Numbering Plan (NP) indicator may provide the PSTN operating system information on the interpretation of the set of address digits transferred in a number parameter of the SS7 ISUP signaling protocol (see ITU-T Q.763 or ITU-T Q.1902.3 for the definitions of the formats and codes of the SS7 ISDN User Part signaling protocol).

In addition, a so-called Network Routing Prefix (NRP) may also be used for providing extra information to the operator, e.g. information regarding number portability to e.g. force specific routings within an operator network. The NRP constitutes of a set of address digits that are prefixed to the digits in the number parameter. Further, it allows interworking between different PSTN networks, in particular it allows differentiation between certain types of calls (e.g. geographical, mobile and/or premium numbers). An NRP and associated indicators may be stored together with the called party number (i.e. B-number) in a Call Detail Record (CDR) and used by billing systems in order to settle traffic between different network operators.

In contrast to PSTN based networks, routing in IP based telecommunications networks rely on domain names, which are translated to an IP address using a DNS server. For example ENUM is a special form of a DNS wherein E.164 telephone numbers are translated to domain names. In general it is the host part of the domain name (typically defined as a realm), which determines the routing. In such scheme the address digits of called party number and the prefixed NRP digits, if present, cannot be used for routing to the next hop (intermediate mode) or next network. In conventional ENUM/DNS the ENUM database only comprises domain names for standard E.164 numbers without any further context.

IETF RFC 4904, discloses a standardized mechanism to convey trunk group parameters in SIP and tel URI's. For this purpose an extension to the tel URI is defined.

Due to these differences in service signaling operators are faced with a number of problems. As the VoIP domain does not allow signaling on the basis of prefixes, the information to be signaled needs to be made available through other means. In practice however such information is difficult to determine and may only be possible to retrieve afterwards, so that real-time decisions based on e.g. the origin of traffic (i.e. ingress traffic relation) is not possible.

Further, without the ability to exchange prefixes between the VoIP domain and the TDM domain the registration of CDRs for billing purposes is difficult as solution like the use of a call reference as defined in the IMS standards is not generally deployed or absent in PSTN. Hence, correlating CDRs in such hybrid system is very difficult and prone to faults and potential fraud and may only be achieved using for example complex comparison of address digit sequences and time-stamps as part of an off-line CDR correlation process.

Some ENUM enhancements regarding the support of Number Portability (NP) and proposed enhancements to convey source information in the ENUM Request within the IETF standardisation, e.g. in the form of additional tags in the user part of the request in the TEL URI or SIP URI or in the realm part of the SIP URI, may allow to derive some extra parameters from the ENUM request. In these solutions however the E.164 format of the number is left untouched and do not include possibilities of manipulation of the number using a prefix. Moreover, the Number Portability enhancement does not cover all current deployments of Number Portability solution worldwide.

Hence, there is a need in the art for improved methods, systems and network elements which may provide efficient routing through mixed networks comprising at least an IP domain and a TDM domain.

### Summary of the invention

It is an object of the invention to reduce or eliminate at least one of the drawbacks of known service provisioning systems. The present invention is directed to subject-matter as disclosed by the appended claims.

Hence, a number prefix, e.g. an NRP, is used to route signaling messages, such as a call message, from the TDM domain to the IP domain and vice-versa. Such routing is simple and efficient as number prefixes are known to the PSTN. Further, association between destination and the number prefix may be provided by a routing engine which may be called by network elements in the IP domain, e.g. an IBCF, and by a PSTN or an network element in the PSTN, in the TDM domain, thereby preventing complex interworking procedures between the SIP protocol in the IP domain and the ISUP protocol in the TDM domain. The NRP comprises all information necessary for routing a call request through the PSTN, including selection of an outgoing trunk in the point of interconnect with a further TDM network. The same is valid for egress traffic because the address of the IBCF and the trunk group and trunk context parameters are only determined in the IP domain by requesting the RE. In addition, the NRP may also comprise information about the origin of the traffic (i.e. the ingress traffic relation) that may be used for purposes like origin dependent routing decisions and for CDR registrations used by billing systems in order to settle the handling of the incoming traffic received from other network operators.

The invention may also relate to a computer program product comprising software code portions configured for, when run on one a routing server, executing the method according to any of the method claims as described above.

The invention will be further illustrated with reference to the attached drawings, which schematically show embodiments according to the invention. It will be understood that the invention is not in any way restricted to these specific embodiments.

### Brief description of the drawings

**Fig. 1** depicts a schematic of at least part of an administrative domain wherein routing is provided using a routing engine according to one embodiment of the invention.
**Fig. 2** depicts a schematic of a routing scheme according to one embodiment of the invention.
**Fig. 3** depicts a schematic of a routing scheme according to another embodiment of the invention.
**Fig. 4** depicts a flow diagram associated with a routing scheme according to one embodiment of the invention.
**Fig. 5** depicts a flow diagram associated with a routing scheme according to another embodiment of the invention.
**Fig. 6** depicts a schematic of a routing scheme according to yet another embodiment of the invention.
**Fig. 7** depicts a flow diagram associated with a routing scheme according to yet another embodiment of the invention.
**Fig. 8** depicts a schematic of a further embodiment of the invention.

### Detailed description

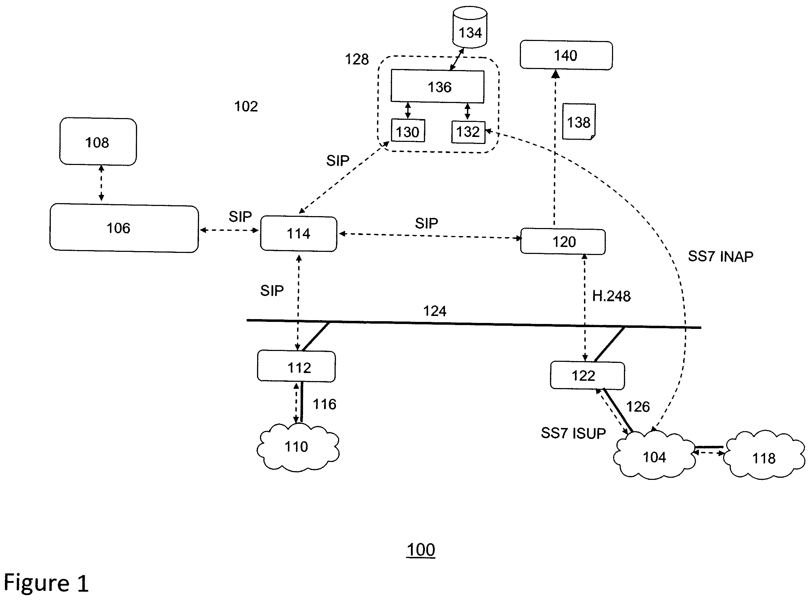

**Fig. 1** depicts a schematic of at least part of an administrative domain **100** comprising networks associated with different technologies. Such administrative domain may be regarded as a network system comprising one or more packet-switched networks interconnected to one or more circuit-switched networks and may for example relate to at least one IP-based NGN **102** interconnected to at least one TDM-based PSTN network **104** and may be associated with the domain of a telecom operator migrating from a PSTN to a NGN or with a domain that is formed by a contractual relation between several operators.

The exemplary NGN in **Fig. 1** relates to an IMS platform comprising IMS core **106** coupled to a number of trusted application servers **108** for hosting services such as voice-centric (VoIP) and multimedia services. The IMS core may comprise a set of Call/Session Control Functions (CSCF), including a Proxy-CSCF (P-CSCF), an Interrogating-CSCF (I-CSCF) and a Serving-CSCF (S-CSCF) (not shown). For terminals (not shown) the P-CSCF is the first contact within the IMS core and (in typical deployments Border Control Functions are used in front of the P-CSCF), using routing information during the registration of terminals to the IMS system, it routes signaling messages (e.g. SIP messages) to the S-CSCF associated with a terminal. The I-CSCF identifies the correct S-CSCF for each incoming SIP request and forwards the request via a P-CSCF to the designated S-CSCF. Its IP address is published in the DNS of the domain so that remote servers may find it. Further, the S-CSCF performs the session control services and acts as a SIP registrar.

Different types of NGNs may be used without departing from the scope of the invention. For example, the NGN may relate to an IP-based network based on a Soft Switch design whereby the basic user subscription functions, the IP session management and the specific VoIP service functions are fully or partially integrated within one or more trusted application servers residing in the network.

The network system comprising IP domain(s) and TDM domain(s) may be coupled to further networks through points of interconnect (PoI). In IMS, points of interconnect may be formed by border control functions, which may generally comprise signaling control functions for controlling media sessions and media control functions for controlling media transport associated with a media session.

In one embodiment such border control functions may be implemented as a session border controller (SBC) as defined in the TISPAN architecture (TS 23 228). Subscriber terminals, e.g. wireline and/or wireless phones, SIP phones, personal computers, etc. may be connected to the IMS through an access-SBC (A-SBC) for providing border control associated with subscriber access to the IMS core (not shown). From an IMS/TISPAN architecture perspective an A-SBC provides the integration of the P-CSCF function for providing access control at the signaling level and the core border gateway function (C-BGF) for providing access control at the transport level.

Similarly, an IP-based network **110** may be interconnected to the IMS to an interconnect-SBC (I-SBC) **112** for providing border control between service provider networks interconnects. From an IMS/TISPAN architecture perspective an I-SBC constitutes the integration of the Interconnect Border Control Function (IBCF) **114** for providing overall border control between the service providers, the Inter-Working function (IWF) for providing SIP signaling interworking, and the Interconnect Border Gateway Function (I-BGF) for providing access control at the transport level.

The IP interconnect between the IP-based network and the SBC/IBCF associated with the network system may be provided by at least one trunk **116.** The trunk may be specified by an IP address and a port number in the IMS core and an IP address and port number at network core of the IP-based network. A trunk may be part of a trunk set, i.e. a collection of trunks the IP-based network may use for traffic to and from certain number ranges. Such consecutive ranges of phone numbers that can be used on a trunk may be used as a source and/or destination for a SIP session. Trunking information, e.g. in the form of predetermined SIP URI parameters such as "tgrp" and "trunk-context", and the address of the IBCF may be used to identify a specific PoI in the IP domain.

The IMS in the network system may provide interworking with the PSTN (or a further TDM-based network **118** connected thereto) through a Media Gateway Control Function (MGCF) **120** connected to the IBCF **114** and to a Media Gateway (MGW) **122.** The MGCF controls the media resources used when traffic needs to flow between the IMS platform and the PSTN. To that end, the MGCF provides call control protocol conversion between SIP and ISUP. Using a suitable protocol interface, e.g. an H.248 interface, the MGCF may control the MGW, which is responsible for the actual media flow between networks converting (i.e. transcoding) a packet based data stream **124,** e.g. an RTP stream, into a circuit based data stream **126** and vice versa.

The network system depicted in **Fig. 1** may be provisioned with routing information by the use of a routing engine (RE) **128.** Such RE may be configured to control the routing of call traffic originating from an IP domain to a TDM domain and vice versa (i.e. egress and ingress call traffic). To that end, the RE may comprise a SIP interface **130** for SIP signaling with the IBCF and a SS7 INAP (Intelligent Network Application Part of SS7) interface **132** for INAP signaling with the PSTN. The SIP part of the RE and an IBCF may be regarded as a transit function as referred to in 3GPP TS 23.228 section 5.19 en Annex I.

The IBCF may be configured to relay SIP messages originating from the IMS core, from other IP networks or from the MGCF to the RE. On the basis of SIP-specific routing information, e.g. trunk parameters and the domain name, the RE may generate ISUP-specific routing information, e.g. an NRP, for use in the TDM domain and insert this information in the SIP message. Similarly, on the basis of ISUP-specific routing parameters such as an NRP, the RE may generate SIP-specific routing information and insert this information in the SIP message.

Alternatively, instead of a SIP relay scheme for retrieving routing information from the RE, an extended ENUM routing scheme may be used. An extended ENUM scheme is described in (IETF RFC 4904) and allows the insertion of extra information, namely the routing number information, in the ENUM response from the RE. One embodiment may provision the routing number with the correct NRP. The determination of the correct NRP may depend on the trunkgroup and trunk contaxt information that the IBCF may insert in the ENUM Request, which is a proposed ENUM enhancement considered by the IETF. In response, the IBCF may be provisioned to use the routing number received (in addition to the typical ENUM response information) to insert the NRP and use this information for routing ingress and egress traffic.

In the TDM domain in which the ISUP protocol (ISDN User Part of SS7) is used for setting up calls, the PSTN may request the RE for routing information by using INAP queries. INAP is a signaling protocol used in Intelligent Networking.

The RE may comprise routing database **134** comprising destination numbers associated with subscribers to the administrative domain of the operator or destination numbers associated with other administrative domains and/or networks interconnected to the network system. The routing database may comprise routing information associated with each destination number, such routing information may be provided in the form of domain names and trunking information for use in the IP domain or the in the form of prefixes, including extra address signals as prefix in the called party number parameter as specified in ITU-T Q.763 or ITU-T Q.1902.3 of the SS7 ISUP signalling protocol for use in the TDM domain.

In some embodiments, the routing database may also comprise origin dependent information (e.g. identification of ingress trunk group relations with other operator networks) and associated routing information. By using the originating and destination numbers, the RE may apply a least cost routing (LCR) algorithm allowing the RE to provide routing through the network system based on cost. In another embodiment, the RE may be provisioned with policy rules that may enforce routing (e.g. specific destinations need to be routed to a specific Point of Interconnect) according bilateral agreement between a first network and a second network. The RE may further comprise a mapping function **136,** i.e. the service logic allowing the RE to correlate routing information in the SIP domain, e.g. the destination number in combination with trunking information (e.g. the trunk group and trunk context parameters in the SIP domain) with a predetermined prefix in the ISUP domain and vice-versa. The RE may be implemented on a server or, alternatively, the RE may have a distributed architecture comprising several interrelated servers and/or network elements.

In particular, for ingress traffic, routing information in a SIP request may be used as an input for the mapping function, which - in response - may return a predetermined prefix, e.g. a NRP, for routing the request further through the TDM domain. The prefix may then be inserted in the SIP message and forwarded to the MGCF, which subsequently translates the SIP message into a corresponding ISUP message, wherein the prefix allows the PSTN to determine the correct point of interconnect (PoI) in the PSTN.

Similarly, for egress traffic, SIP messages originating from the MGCF may be routed by the IBCF to the RE, which may subsequently determine the presence of a prefix in the SIP message. On the basis of the detected NRP, the mapping function may determine on the basis of the NRP routing information associated with the IP domain, e.g. the address of the IBCF and trunking information in the form of predetermined SIP URI parameters such as trunk group and trunk context parameters associated with the IBCF. This information may be inserted in the SIP message and used by the IBCF in order to route the SIP message to the selected point of interconnect in the IP domain.

As all ingress and egress signaling traffic is routed through the MGCF and as the MGCF typically monitors a call session through the whole duration of a call, the MGCF may keep track of all information required (e.g. NRPs, starting and termination time of the call session, etc.) to produce billing information, e.g. in the form of a wholesale CDR **138.** The CDR may be sent by the MGCF to a billing system **140** of the operator.

Hence, the use of the RE as described with reference to **Fig. 1** allows simple and efficient routing of ingress and egress signaling messages in a network system (an administrative domain) comprising both IP and TDM domains. The use of the RE does not require changes in the PSTN as it may use the NRP to route a call message from the TDM to the IP domain. Similarly, the provisioning of information required for routing egress traffic takes place in the IP domain by the IBCF sending a request to the RE. It further allows the PSTN to insert extra information for billing purposes in the NRP so that the MGCF may centrally generate CDRs.

Moreover, use of the RE prevents complex interworking procedures between the SIP protocol in the IP domain and the ISUP protocol in the TDM domain to be implemented in the MGCF, thus keeping the process in the MGCF simple and transparent. The SIP-specific trunk group and trunk context parameters are used for routing traffic to the TDM domain but not in the PSTN as the NRP comprises all information necessary for routing a call request through the PSTN, including selection of an outgoing trunk in the point of interconnect with a further TDM network. The same is valid for egress traffic because the address of the IBCF and the trunk group and trunk context parameters are only determined in the IP domain by requesting the RE.

In addition, the extended use of NRP information in the IP domain simplifies the re-use of existing TDM billing logic where use of NRP information is a well known practice as part of the processes for the identification of ingress and egress traffic relations together with information about the incoming trunk group.

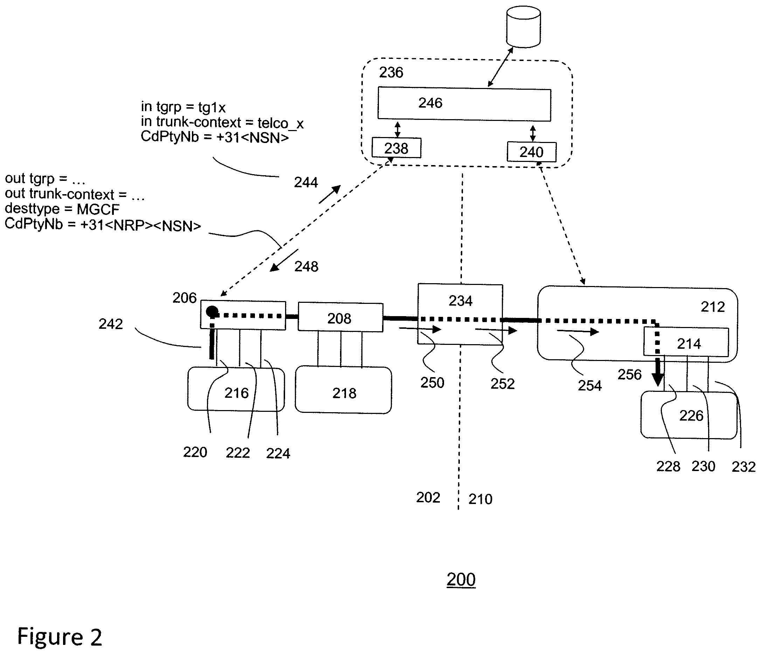

**Fig. 2** depicts a schematic of routing signaling messages through a network system according to one embodiment of the invention. It depicts part of a network system **200** similar to the one described with reference to **Fig. 1** comprising an IP domain **202** associated with an IMS (not shown) and a first IBCF1 and a second IBCF2 **206,208.** Further IP-based networks **216,218** associated with other network operators "Telco X" and "Telco Y" respectively may be interconnected to the IP domain of the network system. For example Telco X may be interconnected via IBCF1 **206** and one or more IP trunks **220-224** to the IP domain of the network system. Further, the network system may comprise a TDM domain **210** associated with a PSTN **212** and a Point of Interconnect (PoI) **214.** A TDM-based network **226** associated with another network operator "Telco Z" may be connected via one or more TDM trunks **228-232** and the PoI to the PSTN.

An MGCF **234** may provide a signaling gateway between the IBCF and the PSTN. The routing of traffic through the network system may be provided by a routing engine (RE) **236** comprising an SIP interface **238** for interfacing with the IP domain and an INAP interface **240** for interfacing with the PSTN in the TDM domain. The RE is described in more detail with reference to **Fig. 1****.**

In a first step **242,** IBCF1 may receive an ingress signaling message, e.g. a SIP request, originating from IP based network Telco X and associated with trunk group "tglx" and trunk context "Telco_x". The SIP request may further contain an URI associated with the originating terminal and the called party number associated with the destination. Thereafter, IBCF1 may relay the SIP request message to the RE (step **244),** which in response triggers a mapping function. Using the destination and the trunking information in the SIP request and the routing information in the routing database, the mapping function may determine that the destination does not relate to a subscriber to the administrative domain and that the message needs to be routed through the administrative domain to a specific PoI associated with the destination.

The mapping function may associate the determined PoI with a specific NRP (step **246**), insert this NRP in front of the National Significant Number (NSN) in the SIP request URI and relays the message comprising the NRP-enriched request URI to the MGCF for further routing (step **248**). As all routing information, including the context information, is enshrined in the NRP, the trunk group and the trunk context parameters remain unused in the routing scheme.

Then, in the next step **250,** the signaling message is received by the MGCF, which checks on the basis of the request URI, using e.g. conventional called party number analyses, whether the message should be routed to the TDM domain. If this is case, the MGCF converts the SIP request and the information therein to a corresponding ISUP message comprising the NRP-enriched called party number and forwards this ISUP message to the PSTN (step **252**). The PSTN may perform a conventional called party number analyses (step **254**) in order to determine the PoI associated with the called number. In this example, the NPR and the destination number may determine that the PoI is TDM-based "Telco Z". Hence, on the basis of the number analyses, the PSTN may route the ISUP message to the identified PoI (step **256**).

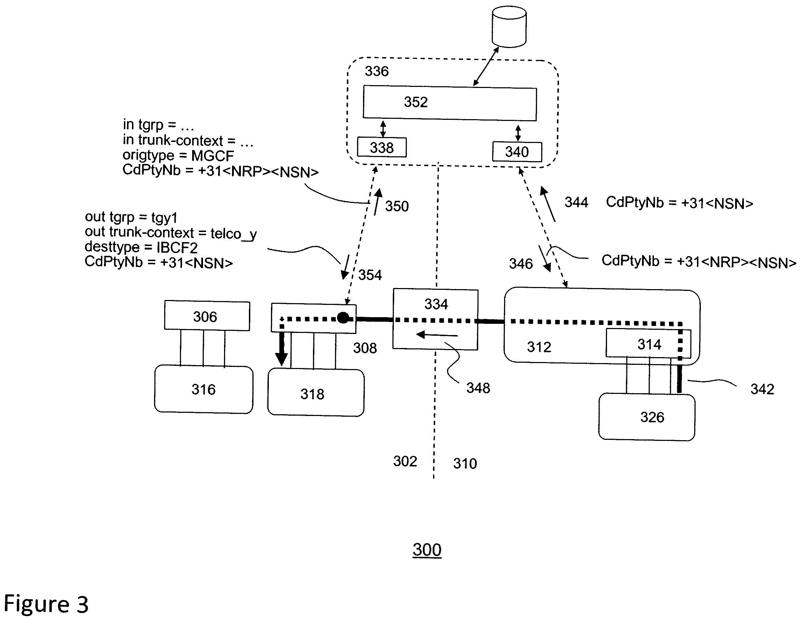

**Fig. 3** depicts a schematic of routing signaling messages through a network system according to another embodiment of the invention. The administrative domain is similar to the one as described with reference to **Fig. 2****,** hence network elements **302-340** in **Fig. 3** corresponds to network elements **202-240** in **Fig. 2****.** In this case however, the routing relates to the routing of an egress signaling message which is sent from the PSTN domain to the IP domain.

The process starts with a PoI associated with the PSTN receiving an ISUP signaling message originating from "Telco Z" (step **342**). Then, in order to determine how the message should be routed through the network system, the PSTN may send an INAP request comprising the destination number in the received ISUP signaling message (step **344**). On the basis of the destination number and the routing database, the RE may determine that the destination is not a subscriber to the network system and that the message should be routed to Telco Y. It further determines that the PoI associated Telco Y is formed by an IBCF in the IP domain. Hence, the RE generates a NRP associated with routing to a MGCF and returns this NRP to the PSTN (step **346**). The PSTN subsequently inserts this NRP in the call party number field of the ISUP message and forwards the NRP-enriched ISUP message to the MGCF.

The MGCF may subsequently convert the NRP-enrichted ISUP message to a NRP-enriched SIP request wherein the SIP request URI comprises the NRP and wherein the trunking parameters are left unused. This SIP message may then be forwarded by the MGCF to an IBCF, e.g. a specific IBCF or an arbitrary IBCF based on round robin or a least utilized method (step **348**), which may relay the SIP message to the RE (step **350).** Upon reception of the SIP message, the RE may execute the mapping function on the basis of NRP, which may identify the address of IBCF2 and the trunking information, in this case: trunk group "tgly" and trunk-context "Telco_y" (step **352).** The RE may insert these trunking parameters into the SIP message, remove the NRP from the SIP request URI and forward the SIP message to IBCF (step **354**), which subsequently routes the message via IBCF2 to Telco Y. Optionally, the IBCF may remove the NRP from the SIP Request URI before forwarding it the another administrative domain.

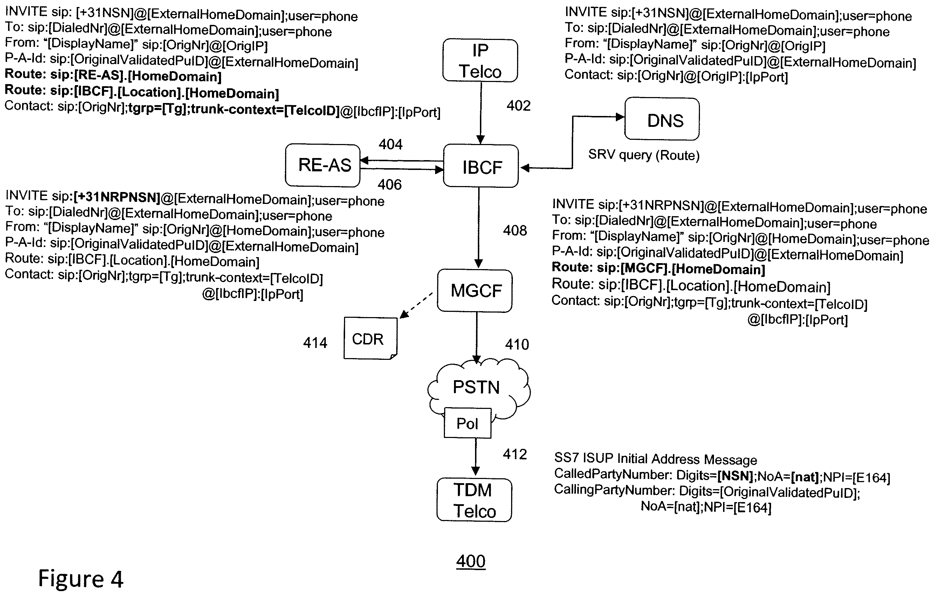

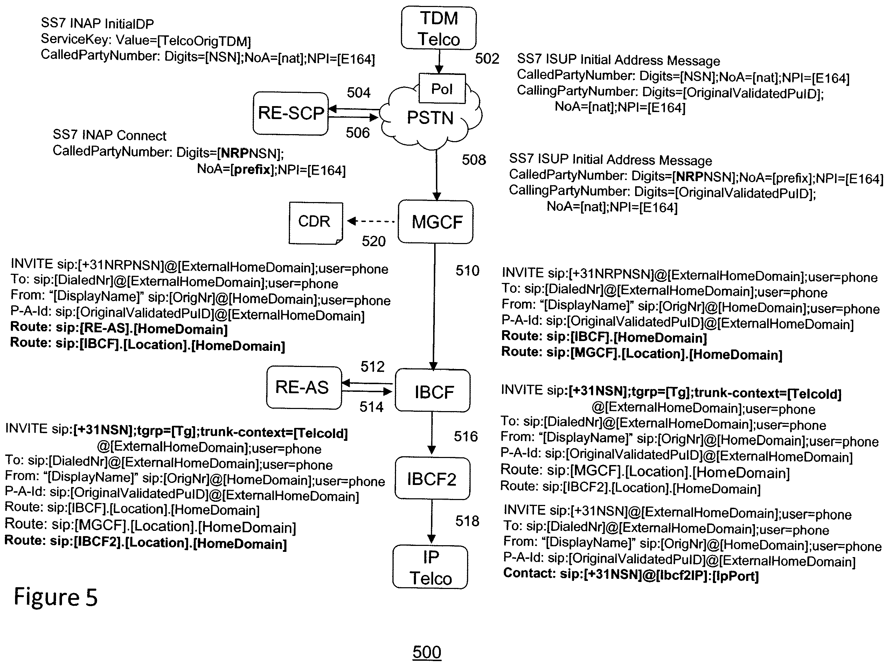

**Fig. 4** and **5** depict the SIP messages involved of the routing schemes as described with reference to **Fig. 2** and **3** (added or modified parameters in these SIP messages are highlighted in bold). In **Fig. 4****,** the incoming SIP request **402** originating from an external IP Telco comprises a SIP URI request associated with an external home domain. The IBCF inserts the "tgrp" and the "trunk-context" parameters associated with the originating IP Telco into the SIP request and routes the request **404** to the routing engine. On the basis of the "tgrp", the "trunk-context" and the domain name, the RE may generate a NRP, which is inserted as a prefix in the SIP request URI: [+31NRPNSN]@[ExternalHomeDomain]. The NRP-enriched SIP request **406,408** may then be routed via the IBCF to the MGCF, where it is converted in an ISUP message **410** comprising the NPR-enrichted called party number in the CallPartyNumber field. After, resolving the NRP routing information using a conventional number analysis, the PSTN may send the ISUP message **412** to the destination, i.e. a TDM-telco, wherein the NRP is removed.

Similarly, in **Fig. 5** an incoming ISUP message **502** comprises a destination number in the CalledPartyNumber field, which may trigger the PSTN to sent an INAP request **504** comprising the destination number to the RE. On the basis of the destination number and the routing database, the mapping function may determine that the destination number should be routed to an IP telco which is interconnected to the network system through a PoI, i.e. IBCF identified by a trunking group and a trunk contrext. On the basis of this information the mapping function may then generate an NRP, which is returned in an INAP message **506** to the PSTN and which may be subsequently inserted in the CalledPartyNumber field of the ISUP message. The NRP-enriched ISUP message may then be forwarded to the MGCF.

The MGCF converts the NRP-enriched ISUP message into a NRP-enriched SIP request **510** comprising the NRP in the SIP request URI. This SIP request is subsequently relayed to an IBCF, e.g. a specific IBCF or an arbitrary IBCF based on round robin or a least utilized method. This IBCF then relays the SIP message to the RE **512,** which retrieves the NRP from the SIP request URI. On the basis of the NRP and the routing database, the mapping function may determine the SIP-specific routing information in the form of trunking parameters. This information is inserted in the SIP request and the NRP is removed from the SIP request URI. This SIP request **514** is forwarded by the IBCF to IBCF2 associated with the IP Telco (step **516**), which may remove the trunking parameters from the SIP request URI and the SIP request **518** to the designated IP Telco.

**Fig. 2-5** illustrate that traffic originating from an IP domain or a TDM domain is routed by the RE through the MGCF to a TDM domain or an IP domain respectively using the NRP. The MGCF will monitor the call signaling throughout the duration of the call. Hence, the MGCF may be a logic point for generating billing information on the basis of the NRP associated with ingress and egress traffic routed through the network system which is used as a transit network. To that end, the routing engine may insert additional billing information to the NRP. By centrally collecting the NRPs, the MGCF may derive the billing information from the NPRs in order to generate wholesale CDRs **414,520,** which may send by the MGCF to a billing system.

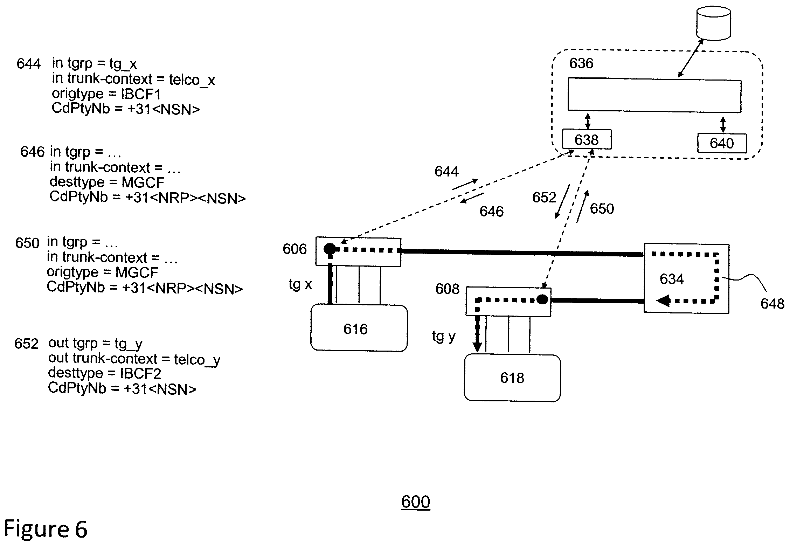

Such billing scheme may be extended to signaling messages which are routed through the IP domain of the network system. **Fig. 6** relates to such routing scheme depicting a schematic of part of an administrative domain similar to those described with reference to **Fig. 2** and **3****.** In this embodiment, an ingress signaling message originating from a first IP-based network **616** is routed by the RE **636** through the administrative domain and via the MGCF **634** to a second IP-based network **618.** The first and second IP bases networks Telco X and Telco Y are connected via IBCF1 **606** and IBCF2 **608** to the network system. Hence, although the routing is entirely within the IP domain, signaling messages may be routed through the MGCF in order to allow the generation of a CDR associated with such traffic.

In this scheme, the signaling message **644** originating from Telco X and comprising the destination (the called party number) and the trunking information is relayed by IBCF1 to the RE. Then, similar to the process as described with reference to **Fig. 2****,** the RE executes the mapping function and generates an NRP reflecting the routing through the administrative domain, in this case through the IP domain, to Telco Y. The RE subsequently sends a SIP message **646** comprising the NRP in the SIP request URI to the IBCF, which forwards that message to the MGCF for billing purposes.

Upon reception of the SIP message, the traditional TDM based B-number analysis logic of the MGCF performs a called party number analyses thereby determining that the NRP relates to the routing of the signaling message to Telco Y, an IP network in the IP domain of the administrative domain. Hence, instead of converting the SIP message into a related ISUP message for the TDM domain, the MGCF reroutes the SIP message (step **648**), including the SIP request URI containing the NRP, back to the IP domain. Further, for billing purposes the MGCF may generate a CDR on the basis of the NPR.

The MGCF may relay the SIP message to a specific IBCF or the IBCF from which the SIP message came from or an arbitrary IBCF based on round robin or a least utilized method. This IBCF then relays the SIP message **650** to the RE, which executes the mapping function in a similar way as described with reference to **Fig. 3****.** On the basis of the NRP and the destination number the mapping function returns the address of the IBCF2 and the trunking information associated with Telco Y. The RE inserts this information in the SIP message, removes the NRP from the SIP request URI and forwards this message to the IBCF, which uses the IBCF address and the trunking information in order to route the message to Telco Y.

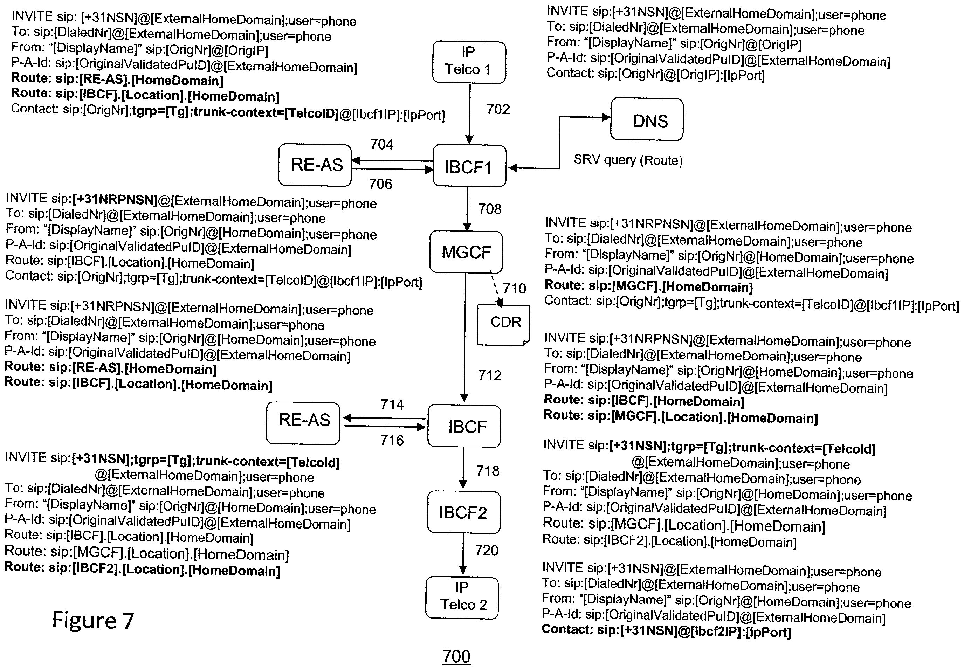

**Fig. 7** depicts the SIP messages involved in the routing schemes as described with reference to **Fig. 6** (added or modified parameters in these SIP messages are highlighted in bold). The routing scheme as illustrated in **Fig. 6** and **7** provide a way to route traffic in the IP domain in the same way as traffic routed from an IP domain to a TDM domain or vice-versa. Hence, the RE allows the MGCF to centrally collect billing information associated with all ingress and egress in the administrative domain without minimal impact on the existing wholesale billing systems and business models which are based on the use of the NRP.

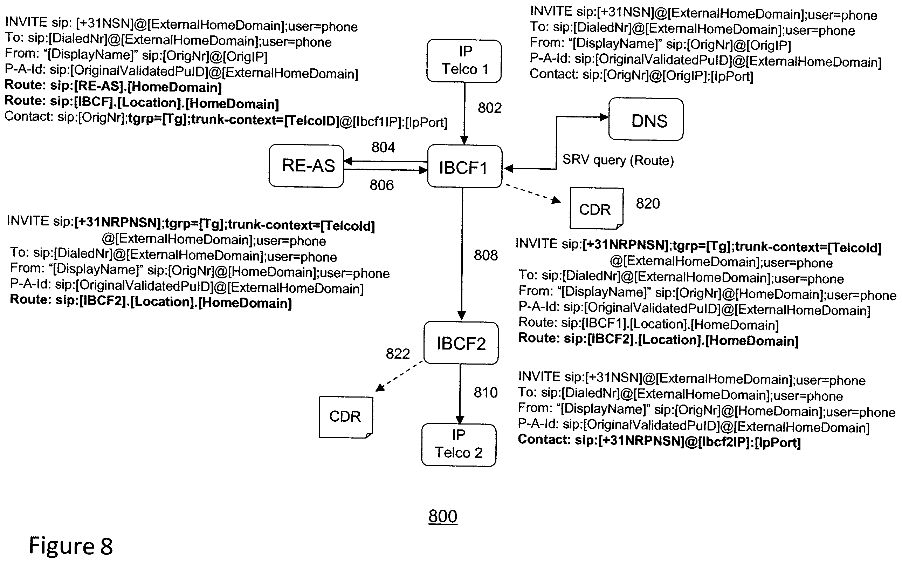

Further, the RE provides a flexible way of migrating a network system to the IP domain. In the end scenario, the use of a MGCF is no longer needed and CDRs may be generated in the IBCFs or in the IMS core. The use of the RE and the routing schemes as described above allows simple and efficient migration from a network system comprising both IP domains and TDM domains using NRP based routing schemes as depicted in **Fig. 2-7** to a full IP based network system, which may use a routing scheme as depicted in **Fig. 8****.** In that case, routing may enabled by a single request to the RE which may determine on the basis of the SIP request URI, the SIP-specific trunking parameters associated with IP telco 2.
In the situation of **Fig. 8****,** an NRP may still be inserted by the RE into signaling messages, see e.g. messages **806** and **810,** so that network nodes responsible generating CDRs, e.g. IBCF1 and IBCF2, may use the information in the NRP.

In further embodiments, SIP-I instead of SIP may be used as a signaling protocol. SIP-I is a SIP version (a SIP derivative), which allows SS7 ISUP messages to be transported in a SIP message using MIME encapsulated SDP. SIP-I allows transport of ISUP messages over VoIP networks so that transparent signaling between IP-network connected PSTNs is guaranteed.

Using two different NRP values allows differentiation between the use of SIP and SIP-I. In particular, for routing signaling messages from the TDM domain to the IP domain, as e.g. illustrated in **Fig. 3****,** the RE may use two different NRPs to inform the MGCF whether SIP or SIP-I is to be used to a destination, e.g. a PoI, in the IP domain. This may avoid that an MGCF always have to encapsulate SS7 ISUP messages in the SIP messages which both saves processing capacity in the MGCFs and simplifies the configuration of the IBCFs. Further, as the RE may determine on the base of information in the routing database whether a destination IP network supports SIP or SIP-I, the RE may use the trunk group and trunk context parameters to inform an egress IBCF that SIP to SIP-I interworking is required or not which simplifies the configuration of IBCFs.

Although the invention is described with reference to routing traffic originating from a first network through one or more networks associated with an administrative domain to a second network, other situations are also foreseen. For example, in further variants traffic may be routed by the RE to a TDM-based network (or an IP-based network) interconnected to the administrative domain, wherein the traffic originates from a terminal of a subscriber to an IP network (or a PSTN) in the administrative domain. In other variants, traffic may be routed by the RE to a terminal of a subscriber to an IP network (or a PSTN) in the administrative domain, wherein the traffic originates from an IP-based or a TMD-based network interconnected to the administrative domain.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

Further, the invention is not limited to IMS but may also be implemented on the basis of a Soft Switch design whereby the basic user subscription functions, the IP session management and the specific VoIP service functions are fully or partially integrated within one or more trusted application servers residing in the network. Moreover, implementations of the invention using other service provisioning networks such as 3GPP Long Term Evolution (LTE) or 3GPP Service Architecture Evolution (SAE) networks are also foreseen. Although the embodiments are described with reference to the use of SIP in the IP domain and ISUP in the TDM domain, other suitable signaling protocols like H.323, H.248 and the MGCP (Media Gateway Control Protocol) may also be used. Moreover, the invention is not limited to the embodiments described above, which may be varied within the scope of the accompanying claims.

## Claims

1. Method for routing a signaling message from a first network to a second network, the method comprising:
a routing engine (128) associating a destination in a signaling message originating from a first network with at least a first routing parameter, said first routing parameter comprising a number prefix; said signaling message based on a signaling protocol for use in a packet-switched domain;
generating an first enhanced signaling message comprising said first routing parameter, said first enhanced signaling message being based on a protocol associated with a packet-switched domain;
converting said first enhanced signaling message into a second enhanced signaling message, said second enhanced signaling message being based on a protocol associated with a circuit-switched domain, said second enhanced signaling message comprising said first routing parameter;
routing said second enhanced signaling message on the basis of said first routing parameter to said destination in said second network.

2. Method according to claim 1, wherein said number prefix is a network routing prefix.

3. Method according to claim 1 or 2, wherein said signaling message and said first enhanced signaling message are based on SIP, SIP-I or a derivative thereof.

4. Method according to any of claims 1-3, wherein said destination is a point of interconnect in a circuit-switched domain.

5. Method according to any of claims 1-4, the method comprising:
receiving a signaling message comprising a URI associated with a destination;
generating a number prefix by executing a mapping function on the basis of said URI and routing information in a routing database;
generating a first enhanced signaling message by inserting said number prefix in said URI.

6. Method for routing a signaling message from a first network to a second network, the method comprising:
a routing engine (114) associating a destination in a signaling message originating from a first network with at least a first routing parameter, said first routing parameter comprising a number prefix, said signaling message based on a signaling protocol associated with a circuit switched domain;
generating an first enhanced signaling message comprising said first routing parameter, said first enhanced signaling message being based on a protocol associated with the circuit-switched domain;
converting said first enhanced signaling message into a second enhanced signaling message, said second enhanced signaling message being based on a protocol associated with a packet-switched domain, said second enhanced signaling message comprising said first routing parameter;
generating on the basis of said first routing parameter in said second enhanced signaling message, second routing information associated with said destination, said second routing information comprising at least reference to a border control function in an IP domain;
routing said second enhanced signaling message to said border control function

7. Method according to claim 6, wherein said signaling message and said first enhanced signaling message are based on a SS7 protocol or a derivative thereof.

8. Method according to any of claims 1-7, the method comprising:
extracting said first routing parameter from said first enhanced or said second enhanced signaling message;
generating a call detail record on the basis of said first routing parameter; and,
sending said call detail record to a billing centre.

## Patentansprüche

1. Verfahren zum Routen einer Signalisierungsnachricht aus einem ersten Netzwerk an ein zweites Netzwerk, wobei das Verfahren umfasst:
eine Routing-Engine (128), die ein Ziel in einer von einem ersten Netzwerk ausgehenden Signalisierungsnachricht wenigstens einem ersten Routing-Parameter zuordnet, wobei der erste Routing-Parameter ein Nummern-Präfix umfasst; wobei die Signalisierungsnachricht auf einem Signalisierungsprotokoll zur Verwendung in einer paketvermittelten Domäne basiert;
Erzeugen einer ersten erweiterten Signalisierungsnachricht, die den ersten Routing-Parameter umfasst, wobei die erste erweiterte Signalisierungsnachricht auf einem einer paketvermittelten Domäne zugeordneten Protokoll basiert;
Umwandeln der ersten erweiterten Signalisierungsnachricht in eine zweite erweiterte Signalisierungsnachricht, wobei die zweite erweiterte Signalisierungsnachricht auf einem einer leitungsvermittelten Domäne zugeordneten Protokoll basiert, wobei die zweite erweiterte Signalisierungsnachricht den ersten Routing-Parameter umfasst;
Routen der zweiten erweiterten Signalisierungsnachricht basierend auf dem ersten Routing-Parameter an das Ziel im zweiten Netzwerk.

2. Verfahren gemäß Anspruch 1, wobei das Zahlen-Präfix ein Netzwerk-Routing-Präfix ist.

3. Verfahren gemäß Anspruch 1 oder 2, wobei die Signalisierungsnachricht und die erste erweiterte Signalisierungsnachricht auf SIP, SIP-I oder einer Ableitung davon basieren.

4. Verfahren gemäß einem der Ansprüche 1-3, wobei das Ziel ein Verbindungspunkt in einer leitungsvermittelten Domäne ist.

5. Verfahren gemäß einem der Ansprüche 1-4, wobei das Verfahren umfasst:
Empfangen einer Signalisierungsnachricht, die einen einem Ziel zugeordneten URI umfasst;
Erzeugen eines Nummern-Präfixes durch Ausführen einer Zuordnungsfunktion auf der Basis des URI und von Routing-Informationen in einer Routing-Datenbank;
Erzeugen einer ersten erweiterten Signalisierungsnachricht durch Einfügen des Nummern-Präfix in den URI.

6. Verfahren zum Routen einer Signalisierungsnachricht aus einem ersten Netzwerk an ein zweites Netzwerk, wobei das Verfahren umfasst:
eine Routing-Engine (114), die ein Ziel in einer von einem ersten Netzwerk ausgehenden Signalisierungsnachricht wenigstens einem ersten Routing-Parameter zuordnet, wobei der erste Routing-Parameter ein Nummern-Präfix umfasst, wobei die Signalisierungsnachricht auf einem einer leitungsvermittelten Domäne zugeordneten Signalisierungsprotokoll basiert;
Erzeugen einer ersten erweiterten Signalisierungsnachricht, die den ersten Routing-Parameter umfasst, wobei die erste erweiterte Signalisierungsnachricht auf einem der leitungsvermittelten Domäne zugeordneten Protokoll basiert;
Umwandeln der ersten erweiterten Signalisierungsnachricht in eine zweite erweiterte Signalisierungsnachricht, wobei die zweite erweiterte Signalisierungsnachricht auf einem einer paketvermittelten Domäne zugeordneten Protokoll basiert, wobei die zweite erweiterte Signalisierungsnachricht den ersten Routing-Parameter umfasst;
Erzeugen dem Ziel zugeordneter zweiter Routing-Informationen auf der Basis des ersten Routing-Parameters in der zweiten erweiterten Signalisierungsnachricht, wobei die zweiten Routing-Informationen wenigstens einen Verweis auf eine Border Control Function in einer IP-Domäne umfassen;
Routen der zweiten erweiterten Signalisierungsnachricht an die Border Control Function.

7. Verfahren gemäß Anspruch 6, wobei die Signalisierungsnachricht und die erste erweiterte Signalisierungsnachricht auf einem SS7-Protokoll oder einer Ableitung davon basieren.

8. Verfahren gemäß einem der Ansprüche 1-7, wobei das Verfahren umfasst:
Extrahieren des ersten Routing-Parameters aus der ersten erweiterten oder der zweiten erweiterten Signalisierungsnachricht;
Erzeugen eines Einzelverbindungsnachweises auf der Basis des ersten Routing-Parameters; und
Senden des Einzelverbindungsnachweises an ein Abrechnungszentrum.

## Revendications

1. Procédé pour router un message de signalisation d'un premier réseau vers un second réseau, le procédé comprenant :
un moteur de routage (128) associant une destination dans un message de signalisation provenant d'un premier réseau à au moins un premier paramètre de routage, ledit premier paramètre de routage comprenant un préfixe de numéro ; ledit message de signalisation étant basé sur un protocole de signalisation à utiliser dans un domaine à commutation de paquets ;
le procédé comprenant de générer un premier message de signalisation amélioré comprenant ledit premier paramètre de routage, ledit premier message de signalisation amélioré étant basé sur un protocole associé à un domaine à commutation de paquets ;
de convertir ledit premier message de signalisation amélioré en un second message de signalisation amélioré, ledit second message de signalisation amélioré étant basé sur un protocole associé à un domaine à commutation de circuits, ledit second message de signalisation amélioré comprenant ledit premier paramètre de routage ;
de router ledit second message de signalisation amélioré sur la base dudit premier paramètre de routage vers ladite destination dans ledit second réseau.

2. Procédé selon la revendication 1, dans lequel ledit préfixe de numéro est un préfixe de routage réseau.

3. Procédé selon la revendication 1 ou la revendication 2, dans lequel ledit message de signalisation et ledit premier message de signalisation amélioré sont basés sur SIP, SIP-I ou un dérivé de ceux-ci.

4. Procédé selon l'une quelconque des revendications 1 à 3, dans lequel ladite destination est un point d'interconnexion dans un domaine à commutation de circuits.

5. Procédé selon l'une quelconque des revendications 1 à 4, le procédé comprenant les étapes suivantes :
recevoir un message de signalisation comprenant une URI associée à une destination ;
générer un préfixe de numéro en exécutant une fonction de mappage sur la base de ladite URI et des informations de routage dans une base de données de routage ;
générer un premier message de signalisation amélioré en insérant ledit préfixe de numéro dans ladite URI.

6. Procédé pour router un message de signalisation d'un premier réseau à un second réseau, le procédé comprenant :
un moteur de routage (114) associant une destination dans un message de signalisation provenant d'un premier réseau à au moins un premier paramètre de routage, ledit premier paramètre de routage comprenant un préfixe de numéro, ledit message de signalisation étant basé sur un protocole de signalisation associé à un domaine à commutation de circuits ;
le procédé comprenant de générer un premier message de signalisation amélioré comprenant ledit premier paramètre de routage, ledit premier message de signalisation amélioré étant basé sur un protocole associé au domaine à commutation de circuits ;
de convertir ledit premier message de signalisation amélioré en un second message de signalisation amélioré, ledit second message de signalisation amélioré étant basé sur un protocole associé à un domaine à commutation de paquets, ledit second message de signalisation amélioré comprenant ledit premier paramètre de routage ;
de générer, sur la base dudit premier paramètre de routage dans ledit second message de signalisation amélioré, des secondes informations de routage associées à ladite destination, lesdites secondes informations de routage comprenant au moins une référence à une fonction de contrôle de frontière dans un domaine IP ;
de router ledit second message de signalisation amélioré vers ladite fonction de contrôle de frontière.

7. Procédé selon la revendication 6, dans lequel ledit message de signalisation et ledit premier message de signalisation amélioré sont basés sur un protocole SS7 ou un dérivé de celui-ci.

8. Procédé selon l'une quelconque des revendications 1 à 7, le procédé comprenant les étapes suivantes :
extraire ledit premier paramètre de routage dudit premier message de signalisation amélioré ou dudit second message de signalisation amélioré ;
générer un enregistrement de détail d'appel sur la base dudit premier paramètre de routage ; et
envoyer ledit enregistrement de détail d'appel à un centre de facturation.
